# EUROPÄISCHE PATENTSCHRIFT

(11) **EP 1 236 024 B1**
(45) Veröffentlichungstag und Bekanntmachung des Hinweises auf die Patenterteilung: **02.08.2006**
(21) Anmeldenummer: 00988739.9
(22) Anmeldetag: 21.11.2000
(51) Int. Cl.: G01F 25/00

(54) **VERFAHREN UND VORRICHTUNG ZUR DURCHFLUSSMESSUNG VON GASEN UND FLÜSSIGKEITEN**
METHOD AND DEVICE FOR MEASURING THE THROUGH FLOW OF GASES AND LIQUIDS
PROCEDE ET DISPOSITIF POUR MESURER LE DEBIT DE GAZ ET DE LIQUIDES

(30) Priorität: 02.12.1999 DE 19957956
(43) Veröffentlichungstag der Anmeldung: 04.09.2002
(73) Patentinhaber: E.ON Ruhrgas AG, 45138 Essen (DE)
(72) Erfinder: SCHMUECKER, Arnd, 44797 Bochum (DE)
(74) Vertreter: Harlacher, Mechthild
(86) Internationale Anmeldenummer: PCT/EP2000/011583
(87) Internationale Veröffentlichungsnummer: WO 2001/040741

(56) Entgegenhaltungen:
- WO-A-99/60342
- DE-A- 19 724 116
- US-A- 5 600 073

## Beschreibung

Die Erfindung betrifft ein Verfahren zur Durchflussmessung von Gasen und Flüssigkeiten. Die Erfindung betrifft ferner ein Durchflussmessgerät für Gase und Flüssigkeiten, mit einem vorgeschalteten Messrohr, das eine Mehrzahl von über dem Querschnitt angeordneten Gruppen von Druckmessstellen aufweist.

Sofern ein Durchflussmessgerät in einer voll ausgebildeten Rohrströmung kalibriert wird, sind genaue Messungen nur dann möglich, wenn das Durchflussmessgerät auch am Betriebsort in einer voll ausgebildeten Rohrströmung arbeitet. Dies setzt eine Einlaufstrecke von entsprechender Länge voraus (bis zu 90 Rohrdurchmesser). Entsprechende Einbauverhältnisse sind nur selten gegeben. Eine Möglichkeit der Abhilfe besteht darin, die Kalibrierung unter den speziellen Einbauverhältnissen durchzuführen. Dies bedingt allerdings einen erheblichen Aufwand, da die Einbauverhältnisse von Zähler zu Zähler unterschiedlich sind.

Man ist daher bestrebt, ein intelligentes Durchflussmessgerät zu entwickeln, welches in unterschiedlich gestörten Strömungen kalibriert wird. Am Betriebsort können dann die dort herrschenden Störungen erfasst und entsprechend kompensiert werden, siehe die Vorrichtung der eingangs genannten Art (DE 197 24 116 A1). Hierzu sind zusätzliche Messgrößen erforderlich, die sich in Abhängigkeit von den Störungen ändern.

Bei der aus der DE 197 24 116 A1 bekannten Vorrichtung bzw. dem beschriebenen Korrekturverfahren werden als zusätzliche Messgrößen die Wandschubspannungs-Verteilungen erfasst, die als klassische strömungsmechanische Messgrößen ein unmittelbares Merkmal der gestörten Strömung darstellen. Hierzu dient eine spezielle Ausbildung und Anordnung der Druckmessstellen. Jede Gruppe besteht aus zwei winklig zueinander ausgerichteten Prestonsonden, die in Verbindung mit dem zugeordneten statischen Wanddruck ein Maß für die Wandschubspannungen liefern, wobei auch deren Umfangskomponente erfasst wird. Die Prestonsonden sind auf der Wand aufliegende Pilotsonden, deren Mündung einer Wandöffnung zur Erfassung des statischen Drucks zugeordnet sind.

Die verwendeten Sonden besitzen Details von mikroskopischen Abmessungen und sind daher aufwendig in der Herstellung. Außerdem reagieren sie sehr empfindlich auf Verschmutzungen und Beschädigungen. Diese Eigenschaften sind zwar beim Kalibrieren tolerierbar, wirken sich aber um so störender während des Betriebes aus.

Der Erfindung liegt daher die Aufgabe zugrunde, eine einfachere, kostengünstigere und zuverlässigere Möglichkeit zum Kompensieren von Strömungsstörungen bei Durchflussmessungen zu schaffen.

Zur Lösung dieser Aufgabe wird bei dem erfindungsgemäßen Verfahren zur Durchflussmessung von Gasen und Flüssigkeiten
- ein Durchflussmessgerät mit einer Kalibrierströmung beaufschlagt ,
- unterschiedliche Störungen in der Kalibrierströmung an einer Stelle stromauf des Durchflussmessgerätes erzeugt, wobei der Abstand zwischen der Störstelle und dem Durchflussmessgerät kürzer als eine für eine voll ausgebildete Strömung erforderliche Einlaufstrecke ist,
- stromab der Störstelle an einer Messstelle eine Mehrzahl von über dem Querschnitt der Kalibrierströmung verteilten Gruppen von Druckmesswerten erfasst,
- an der Messstelle eine zusätzliche Störung der Strömung mittels mindestens eines in die Kalibrier- bzw. Betriebsströmung eintauchenden Störkörpers erzeugt und
- die aus der zusätzlichen Störung resultierenden Gruppen von Druckmesswerten jeweils in der Oberfläche des Störkörpers erfasst,
- die Druckmesswerte den jeweiligen Störungen zur Festlegung zugehöriger Durchflusskorrekturen zugeordnet ,
- das kalibrierte Durchflussmessgerät mit einer Betriebsströmung beaufschlagt und
- an der Messstelle die über dem Querschnitt der Betriebsströmung verteilten Gruppen von Druckmesswerten erfasst und hieraus in einem neuronalen Netz oder in einer Datenbank die zugehörige Durchflusskorrektur ermittelt und der gemessene Durchfluss entsprechend korrigiert.

Das eingangs genannte Durchflussmessgerät kennzeichnet sich erfindungsgemäß dadurch aus, dass mindestens ein Störkörper nach innen in die Strömung vorspringt, wobei die Eintauchtiefe so gewählt wird, dass eine Störung der Strömung erzeugt wird und dass die Gruppen von Druckmessstellen jeweils in der Oberfläche des Störkörpers angeordnet und an eine ein neuronales Netz oder eine Datenbank aufweisende Datenverarbeitungseinrichtung angeschlossen sind.

Der Erfindung liegt die Erkenntnis zugrunde, dass sich sämtliche bei ihrer Entstehung stark dreidimensionalen Störungen stromabwärts rasch vereinfachen. Bereits in relativ geringem Abstand von der Störstelle findet man nur noch wenige in ihrer Form prinzipiell unterschiedliche Störungsformen. Diese lassen sich durch die Gruppen von einfachen Druckmessöffnungen in der Oberfläche der Störkörper über das neuronale Netz oder die Datenbank ggf. durch Interpolation zwischen den gespeicherten Werten identifizieren und quantifizieren sowie im Betrieb entsprechend kompensieren.

Die Gruppen von Druckmesswerten bilden für jede Art der Reststörungen ein eigenes typisches Muster, das als Eingangswert für das neuronale Netz oder die Datenbank verwendet wird. Im Gegensatz zur Erfassung der Wandschubspannungsverteilung, die eine direkte Identifikation einer Strömung zulässt, verzichtet die Erfindung auf die Messung von Größen, die die Störungen unmittelbar charakterisieren. Vielmehr werden die Messgrößen, die in das neuronale Netz oder die Datenbank gelangen, durch die Wechselwirkung zwischen den Störkörpern und der gestörten Strömung erst erzeugt.

Während der Kalibrierung wird das neuronale Netz trainiert bzw. die Datenbank gespeist, und im Betrieb liefert es bzw. sie die jeweils erforderlichen Durchflusskorrekturen.

Die Messgrößen können durch Verwendung einer entsprechenden Anzahl von Störkörpern mit einer entsprechenden Anzahl von Druckmessstellen in gewünschter Menge zur Verfügung gestellt werden. Die erforderliche Messtechnik ist einfach und robust. Hieraus resultiert ein kostengünstiger Aufbau von hoher Zuverlässigkeit.

In Anwendung auf Ultraschall-Gaszähler eröffnet die Erfindung die Möglichkeit, mit einem einzigen Schallpfad zu arbeiten. Die zusätzlich erforderlichen Informationen über Vorstörungen werden durch das neuronale Netz oder die Datenbank geliefert.

Die Störkörper tauchen in die Strömung ein, um gezielt zusätzliche Störungen der Strömung zu bewirken. Daraus resultierten Druckmesswerte ausreichender Größe, die problemlos erfasst werden können. Die zusätzlich erzeugten Störungen der Strömung werden durch das neuronale Netz bzw. die Datenbank korrigiert. Jeder Störkörper besitzt auf seiner Oberfläche eine charakteristische, von der Strömung hervorgerufene Druckverteilung. Die Störkörper können in beliebiger Weise über dem Querschnitt der Strömung verteilt werden. Einige Durchflussmessgeräte sind mit Leitvorrichtungen ausgestattet, die die Vorstörungen reduzieren sollen. Als Beispiel seien die Leitschaufeln von Turbinenradzählern genannt. Dabei besteht die Möglichkeit, die Druckmessstellen an den Leitschaufeln anzuordnen. Der Einlaufapparat der Turbinenradzähler wird somit zum Messrohr.

Gleichermaßen besteht die Möglichkeit, die Störkörper auf die Wandung des Messrohres anzuordnen. Die Eintauchtiefe wird dabei so gewählt, dass die zusätzlichen Störungen der Strömung gerade ausreichen, problemlos erfassbare Messwerte zu liefern.

Unter diesem Gesichtspunkt hat es sich als besonders vorteilhaft herausgestellt, die Störkörper konvex gewölbt auf der Innenwand des Messrohres auszubilden, und zwar vorzugsweise teiltropfenförmig, wobei sie mit ihrem spitzeren Ende gegen das Durchflussmessgerät gerichtet sind.

Die Anordnung der Druckmessstellen auf den Störkörpern ist grundsätzlich beliebig. Vorzugsweise allerdings bilden die Gruppen von Druckmessstellen auf den Störkörpern übereinstimmende Muster, wobei es besonders vorteilhaft ist, wenn jeder Störkörper drei dreieckförmig zueinander angeordnete Druckmessstellen aufweist. Die von den Druckmessstellen gebildeten Dreiecke sind vorzugsweise gleichseitig ausgebildet, wobei eine ihrer Spitzen entgegengesetzt zum Druckmessgerät ausgerichtet ist.

Eine konstruktiv und herstellungstechnisch besonders einfache Ausführungsform ergibt sich dadurch, dass das Messrohr für Niederdruckbetrieb dünnwandig ausgebildet ist und dass die Störkörper in die Wandung des Messrohres eingedellt sind.

Die Erfindung wird im Folgenden anhand eine bevorzugten Ausführungsbeispiels im Zusammenhang mit der beiliegenden Zeichnung näher erläutert. Die Zeichnung zeigt in:
Figur 1 eine perspektivische Ansicht eines Messrohres;
Figur 2 eine perspektivische Ansicht eines Ausschnitts des Messrohres mit einem Störkörper.

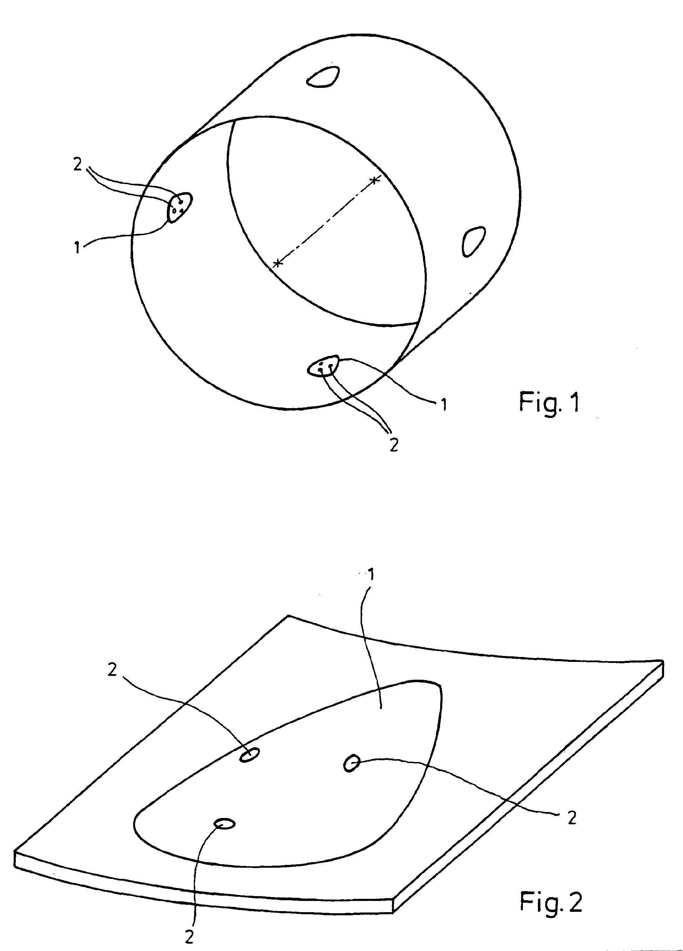

Das Messrohr nach Figur 1 wird einem nicht dargestellten Durchflussmessgerät vorgeschaltet. Es weist eine Mehrzahl von Störkörpern 1 auf, die in das dünnwandige Messrohr eingedellt sind.

Wie insbesondere aus Figur 2 ersichtlich, sind die Störkörper 1 konvex gewölbt, und zwar teiltropfenförmig. Die Anordnung ist so getroffen, dass der rundere Teil der Störkörper 1 gegen die Strömungsrichtung weist, während das spitzere Ende gegen das Durchflussmessgerät gerichtet ist.

Nach Figur 1 sind vier Störkörper 1 gleichmäßig über dem Umfang verteilt, und zwar in einer gemeinsamen Radialebene. Nach Bedarf kann die Anzahl der Störkörper auch erhöht werden.

Jeder Störkörper ist mit einer Gruppe von Druckmessstellen 2 versehen. Im vorliegenden Fall handelt es sich um drei Druckmessstellen 2, die gemeinsam ein Dreieck bilden,
wobei eine der Spitzen des Dreiecks gegen die Strömungsrichtung, gerichtet ist. Die Druckmeßstellen 2 bilden auf den Storkörpern 1 übereinstimmende Muster. Abweichende Muster sind denkbar, und zwar auch unter Erhöhung der Anzahl der Druckmeßstellen.

Die Druckmeßstellen 2 sind als einfache Öffnungen in der Oberfläche der Störkörper ausgebildet. Sie können getrennt voneinander mit einer Druckmeßdose abgetastet werden, wobei die Meßwerte in ein gemeinsames neuronales Netz eingespeist werden.

Zum Zwecke der Kalibrierung wird das Durchflußmeßgerät zusammen mit dem vorgeschalteten Meßrohr in eine Meßstrecke eingebaut, die stromauf des Druckmeßgerätes eine Einrichtung zur Erzeugung von Störungen in der Kalibierströmung aufweist. Der Abstand der Störstelle vom Durchflußmeßgerät ist kürzer als eine Einlaufstrecke, wie sie erforderlich wäre, um die erzeugten Störungen abklingen zu lassen, so daß das Durchflußmeßgerät mit einer voll ausgebildeten Stömung beaufschlagt würde.

Der Abstand der Störstelle vom Meßrohr wird vorzugsweise so gewählt, daß sich die unterschiedlichen Störungen auf einige wenige prinzipiell unterschiedliche Störungsformen reduziert haben. Diese Störungsformen erzeugen an den Sondenkörpern Druckmeßwerte, die unterschiedliche typische Muster bilden. Diese Muster werden in das neuronale Netz eingespeist, und das neuronale Netz wird auf diese Weise trainiert. Grundsätzlich allerdings kann die Zahl der erfaßten Störungsformen beliebig groß sein.

Das auf diese Weise kalibrierte Durchflußmeßgerät erfaßt die später im Betrieb auftretenden Störungsmuster durch die Druckmessungen an den Störkörpern und gibt sie in das neuronale Netz ein. Das neuronale Netz erkennt die typische Störungsform und liefert die zugehörige Information für die Korrektur des gemessenen Durchflußwertes.

Ändert sich die Art der Störung im Betrieb nicht, so bedarf es nur einer einmaligen Korrektur bei der Installation des Durchflußmeßgerätes. Ändert sich hingegen die Art der Störung fortlaufend, wie es zum Beispiel hinter einem Regler der.Fall ist, so müssen die Druckmessungen ständig wiederholt werden. Dabei ist es auch möglich, die Druckmeßwerte kontinuierlich zu erfassen und die Meßfehler kontinuierlich zu kompensieren.

Die Störkörper 2 tauchen nur geringfügig in die Kalibrier- bzw. Betriebsströmung ein, so daß die dadurch hervorgerufenen Störungen minimal sind, jedoch eine zuverlässige Erfassung der Druckmeßwerte erlauben. Im übrigen werden die Störungen durch das neuronale Netz kompensiert.

## Patentansprüche

1. Verfahren zur Durchflussmessung von Gasen und Flüssigkeiten,
wobei
- ein Durchflussmessgerät mit einer Kalibrierströmung beaufschlagt wird,
- unterschiedliche Störungen in der Kalibrierströmung an einer Stelle stromauf des Durchflussmessgerätes erzeugt werden, wobei der Abstand zwischen der Störstelle und dem Durchflussmessgerät kürzer als eine für eine voll ausgebildete Strömung erforderliche Einlaufstrecke ist,
- stromab der Störstelle an einer Messstelle eine Mehrzahl von über dem Querschnitt der Kalibrierströmung verteilten Gruppen von Druckmesswerten erfasst werden,
- an der Messstelle eine zusätzliche Störung der Strömung mittels mindestens eines in die Kalibrier- bzw. Betriebsströmung eintauchenden Störkörpers erzeugt wird und
- die aus der zusätzlichen Störung resultierenden Gruppen von Druckmesswerten jeweils in der Oberfläche des Störkörpers erfasst werden,
- die Druckmesswerte den jeweiligen Störungen zur Festlegung zugehöriger Durchflusskorrekturen zugeordnet werden,
- das kalibrierte Durchflussmessgerät mit einer Betriebsströmung beaufschlagt wird und
- an der Messstelle die über dem Querschnitt der Betriebsströmung verteilten Gruppen von Druckmesswerten erfasst werden und hieraus in einem neuronalen Netz oder in einer Datenbank die zugehörige Durchflusskorrektur ermittelt und der gemessene Durchfluss entsprechend korrigiert wird.

2. Durchflussmessgerät für Gase und Flüssigkeiten, mit einem vorgeschalteten Messrohr, das eine Mehrzahl von über dem Querschnitt angeordneten Gruppen von Druckmessstellen aufweist,
**dadurch gekennzeichnet,**
**dass** mindestens ein Störkörper nach innen in die Strömung vorspringt, wobei die Eintauchtiefe so gewählt wird, dass eine Störung der Strömung erzeugt wird und dass die Gruppen von Druckmessstellen (2) jeweils in der Oberfläche des Störkörpers (1) angeordnet und an eine ein neuronales Netz oder eine Datenbank aufweisende Datenverarbeitungseinrichtung angeschlossen sind.

3. Durchflussmessgerät nach Anspruch 2,
**dadurch gekennzeichnet, dass** die Störkörper (1) konvex gewölbt auf der Innenwand des Messrohres ausgebildet sind.

4. Durchflussmessgerät nach Anspruch 3,
**dadurch gekennzeichnet, dass** die Störkörper (1) teiltropfenförmig ausgebildet und mit ihrem spitzeren Ende gegen das Durchflussmessgrät gerichtet sind.

5. Durchflussmessgerät nach einem der Ansprüche 2 bis 4,
**dadurch gekennzeichnet, dass** die Gruppen von Druckmessstellen (2) auf den Störkörpern (1) übereinstimmende Muster bilden.

6. Durchflussmessgerät nach einem der Ansprüche 2 bis 5,
**dadurch gekennzeichnet, dass** jeder Störkörper drei dreieckförmig zueinander angeordnete Druckmessstellen (2) aufweist.

7. Durchflussmessgerät nach Anspruch 6,
**dadurch gekennzeichnet, dass** die von den Druckmessstellen (2) gebildeten Dreiecke mit einer ihrer Spitzen fort vom Durchflussmessgerät gerichtet sind.

8. Durchflussmessgerät nach einem der Ansprüche 2 bis 7,
**dadurch gekennzeichnet, dass** das Messrohr dünnwandig ausgebildet ist und dass die Störkörper (1) in die Wandung des Messrohres eingedellt sind.

## Claims

1. Method for measuring the through flow of gases and liquids,
wherein
- a through flow measurement device is loaded with a calibration stream,
- different perturbations in the calibration stream are generated at a point upstream of the through flow measurement device, with the distance between the point of perturbation and the through flow measurement device being shorter than an upstream straight length required for a fully formed stream,
- downstream of the point of perturbation at a measuring point there are recorded a plurality of groups of pressure measurement values distributed across the cross-section of the calibration stream,
- at the measuring point there is generated an additional perturbation of the stream by means of at least one perturbation body dipping into the calibration or operation stream, and
- the groups of pressure measurement values resulting from the additional perturbation are each recorded in the surface of the perturbation body,
- the pressure measurement values are assigned to the relevant perturbations to determine associated through flow corrections,
- the calibrated through flow measurement device is loaded with an operational flow, and
- at the measuring point there are recorded the groups of pressure measurement values distributed across the cross-section of the operating stream, and therefrom there is determined in a neuronal network or in a database the associated through flow correction, and the measured through flow is corrected accordingly.

2. Through flow measurement device for gases and liquids having an upstream measurement tube exhibiting a plurality of groups of pressure measurement points arranged across the cross-section,
**characterised in that**
at least one perturbation body protrudes inwards into the stream, the dipping depth being selected such that a perturbation of the stream is generated and that the groups of pressure measurement points (2) are each arranged in the surface of perturbation body (1) and are connected to a data processing device exhibiting a neuronal network or a data base.

3. Through flow measurement device according to claim 2,
**characterised in that** the perturbation body (1) is formed in a convex curve manner on the inside wall of the measurement tube.

4. Through flow measurement device according to claim 3,
**characterised in that** the perturbation body (1) is formed in the shape of a partial drop, its pointed end being directed at the through flow measurement device.

5. Through flow measurement device according to one of claims 2 to 4
**characterised in that** the groups of pressure measurement points (2) form agreeing patterns on the perturbation body (1).

6. Through flow measurement device according to one of claims 2 to 5
**characterised in that** each perturbation body exhibits three pressure measurement points (2) arranged towards each other in the shape of triangle.

7. Through flow measurement device according to claim 6
**characterised in that**, with one of their tips, the triangles formed by the pressure measurement points (2) face away from the flow measurement device.

8. Through flow measurement device according to one1 of claims 2 to 7
**characterised in that** the measurement tube has a thin-wall designed and that the perturbation bodies (1) are dented into the wall of the measurement tube.

## Revendications

1. Procédé pour mesurer le débit de gaz et de liquides,
où
- un appareil de comptage de débit est soumis à un flux d'étalonnage,
- des perturbations différentes sont générées dans le flux d'étalonnage à un endroit situé en amont de l'appareil de comptage de débit, la distance entre l'endroit de perturbation et l'appareil de comptage de débit étant plus petite que la longueur droite nécessaire pour un flux complètement établi,
- une multitude de groupes de valeurs de mesure de pression, répartis sur la section du flux d'étalonnage en aval de l'endroit de perturbation, est saisie à une prise de mesure,
- une perturbation supplémentaire du flux est générée au niveau de la prise de mesure à l'aide d'au moins un corps de perturbation immergé dans le flux d'étalonnage resp. d'exploitation, et
- les groupes de valeurs de mesure de pression résultant de la perturbation supplémentaire sont à chaque fois saisis à la surface du corps de perturbation,
- les valeurs de mesure de pression sont attribuées aux perturbations correspondantes pour déterminer des coefficients de correction y appartenant,
- l'appareil de comptage de débit étalonné est soumis à un flux d'exploitation et
- les groupes de valeurs de mesure de pression, répartis sur la section du flux d'exploitation, sont saisis au niveau de la prise de mesure et, partant de ceux-ci, la correction de débit est déterminée dans un réseau de neurones ou dans une base de données, et le débit mesuré est corrigé en conséquence.

2. Dispositif pour mesurer le débit de gaz et de liquides avec un tube de mesurage disposé en amont, présentant une multitude de groupes de prises de mesure de pression, répartis sur la section,
**caractérisé par le fait**
**qu'**au moins un corps de perturbation fait saillie à l'intérieur du flux, la profondeur d'immersion étant choisie de la sorte qu'une perturbation du flux est générée et que les groupes de prises de mesure de pression (2) sont disposés à chaque fois à la surface du corps de perturbation (1) et reliés à un dispositif de traitement de données, comprenant un réseau de neurones ou une base de données.

3. Dispositif pour mesurer le débit suivant la revendication 2,
**caractérisé par le fait que** les corps de perturbation (1) sont formés de manière convexe sur la paroi intérieure du tube de mesurage.

4. Dispositif pour mesurer le débit suivant la revendication 3,
**caractérisé par le fait que** les corps de perturbation (1) sont conçus sous forme de goutte partielle et dirigés, avec leur extrémité pointue, vers l'appareil de comptage de débit.

5. Dispositif pour mesurer le débit suivant l'une des revendications 2 à 4,
**caractérisé par le fait que** les groupes de prises de mesure de pression (2) sur les corps de perturbation (1) forment des modèles concordants.

6. Dispositif pour mesurer le débit suivant l'une des revendications 2 à 5,
**caractérisé par le fait que** chaque corps de perturbation présente trois prises de mesure de pression (2), disposées en forme triangulaire les unes par rapports aux autres.

7. Dispositif pour mesurer le débit suivant la revendication 6,
**caractérisé par le fait que** les triangles formés par les prises de mesure de pression (2) sont dirigés, avec l'une de leurs pointes, en direction opposée de l'appareil de comptage de débit.

8. Dispositif pour mesurer le débit suivant l'une des revendications 2 à 7,
**caractérisé par le fait que** le tube de mesurage possède une paroi fine et que les corps de perturbation (1) sont bosselés dans la paroi du tube de mesurage.
